(19) Europäisches Patentamt
European Patent Office
Office européen des brevets

(11) Publication number: **0 667 362 A1**

(12) **EUROPEAN PATENT APPLICATION**

(21) Application number: **95101134.5**

(51) Int. Cl.[6]: **C08G 18/38**, C09D 175/02

(22) Date of filing: **27.01.95**

(30) Priority: **09.02.94 US 194296**

(43) Date of publication of application: **16.08.95 Bulletin 95/33**

(84) Designated Contracting States: **BE CH DE ES FR GB IT LI NL**

(71) Applicant: **Bayer Corporation**
**One Mellon Center**
**500 Grant Street**
**Pittsburgh, PA 15219-2502 (US)**

(72) Inventor: **Luthra, Sanjay**
**2101 Timber Glen Drive**
**Imperial, PA 15126 (US)**
Inventor: **Martin, Frank L.**
**1737 Broadhead Road**
**Moon Township, PA 15108 (US)**

(74) Representative: **Weber, Gerhard, Dr. et al**
**Bayer AG**
**Konzernzentrale RP**
**Patente Konzern**
**D-51368 Leverkusen (DE)**

(54) **Polyurea coating compositions having improved pot lives.**

(57) The present invention relates to a coating composition for the preparation of a polyurea coating which contains

a) a polyisocyanate component,

b) at least one compound corresponding to the formula

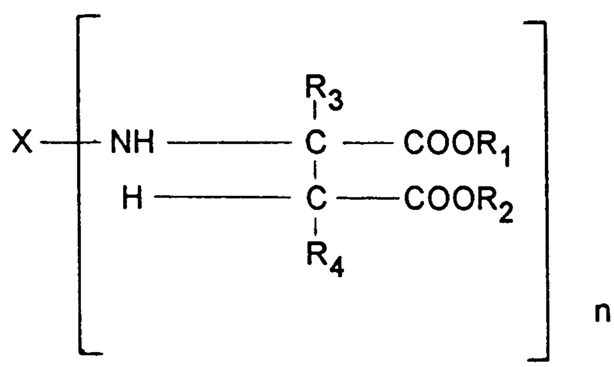

(I)

wherein

- X represents an organic group which has a valency of n and is inert towards isocyanate groups at a temperature of 100 °C or less,
- $R_1$ and $R_2$ may be identical or different and represent organic groups which are inert towards isocyanate groups at a temperature of 100 °C or less,
- $R_3$ and $R_4$ may be identical or different and represent hydrogen or organic groups which are inert towards isocyanate groups at a temperature of 100 °C or less and
- n represents an integer with a value of at least 2, and

c) 0.1 to 15 weight percent, based on the total weight of the coating compositions, of a water-adsorbing zeolite.

EP 0 667 362 A1

## BACKGROUND OF THE INVENTION

This present invention relates to coating compositions which have an improved pot life, preferably those which have an improved pot life without substantially increasing the dry time of the resulting coatings.

Two-component coating compositions containing, as binder, a polyisocyanate component in combination with an isocyanate-reactive component, in particular a polyhydroxyl component, are known. They are suitable for the formation of high quality coatings and can be adjusted to produce coatings which are hard, elastic, abrasion resistant, solvent resistant and especially weather resistant. A disadvantage of these systems is the amount of organic solvent which must be used to reduce the viscosity of these systems for subsequent processing.

This disadvantage may be overcome according to U.S. Patent 5,126,170, which is directed to coating compositions wherein the binders are based on a two-component system of a polyisocyanate component and an isocyanate-reactive component containing partly or entirely certain secondary polyamines.

The copending application discloses that the coating compositions provide numerous advantages. For example, they are suitable in particular as binders in low solvent or solvent-free coating compositions and enable the coatings to harden rapidly by a chemical cross-linking reaction which takes place either at room temperature or elevated temperature.

A disadvantage of the coating compositions described in the copending application is that even though they possess fast dry times, for some applications they do not provide adequate pot life, i.e., the viscosity of the system increases too rapidly prior to application of the coating composition to a substrate.

Accordingly, it is an object of the present invention to provide a longer pot life without significantly increasing the dry time of the coating composition and without altering any of the other desirable properties of the composition.

This object may be achieved with the coating compositions of the present invention which contain the zeolites described hereinafter to increase the pot life. It is surprising that an increase in the pot life can be obtained by incorporating water-adsorbing zeolites. While zeolites are commonly used to adsorb any water present in the components before preparation of the coating compositions, the removal of minor amounts of water would not be expected to have any significant on the pot life of the coating compositions. This is because water reacts much more slowly with polyisocyanates than the isocyanate-reactive component present in the coating compositions, i.e., polyamines containing secondary amino groups. Accordingly, it would not be expected that removing water would have any significant affect on the pot life of the composition.

## SUMMARY OF THE INVENTION

The present invention relates to a coating composition for the preparation of a polyurea coating which contains

a) a polyisocyanate component,

b) at least one compound corresponding to the formula

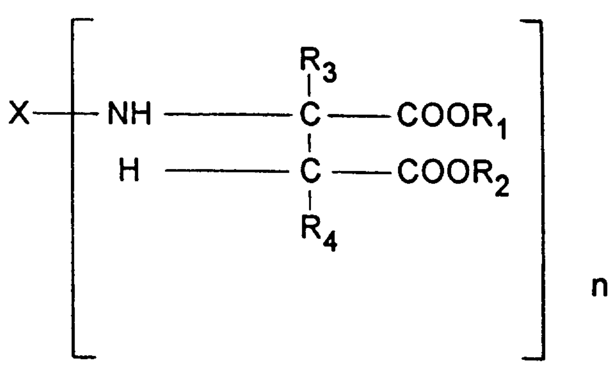

(I)

wherein

X represents an organic group which has a valency of n and is inert towards isocyanate groups at a temperature of 100 °C or less,

$R_1$ and $R_2$ may be identical or different and represent organic groups which are inert towards isocyanate groups at a temperature of 100 °C or less,

$R_3$ and $R_4$ may be identical or different and represent hydrogen or organic groups which are inert towards isocyanate groups at a temperature of 100 °C or less and

n represents an integer with a value of at least 2, and

c) 0.1 to 15 weight percent, based on the total weight of the coating composition, of a water-adsorbing zeolite.

## DETAILED DESCRIPTION OF THE INVENTION

In accordance with the present invention a "polyurea" is understood to mean a polymer containing urea groups and optionally other groups such as urethane groups.

The cross-linking which takes place in the process according to the present invention is based on an addition reaction between polyisocyanate component a) and the polyamines b) containing secondary amino groups, which are also known as "polyaspartic acid derivatives." This reaction is known from previously discussed U.S. Patent 5,126,170 and also from DE-OS 2,158,945, which discloses this reaction for the preparation of intermediate products which are then applied to a suitable substrate and converted at elevated temperatures into heterocyclic final products.

Examples of suitable polyisocyanates which may be used as the polyisocyanate component a) in accordance with the present invention include monomeric diisocyanates, preferably NCO prepolymers and more preferably polyisocyanate adducts. Suitable monomeric diisocyanates may be represented by the formula

$R(NCO)_2$

in which R represents an organic group obtained by removing the isocyanate groups from an organic diisocyanate having a molecular weight of about 112 to 1,000, preferably about 140 to 400. Diisocyanates preferred for the process according to the invention are those represented by the above formula in which R represents a divalent aliphatic hydrocarbon group having 4 to 18 carbon atoms, a divalent cycloaliphatic hydrocarbon group having 5 to 15 carbon atoms, a divalent araliphatic hydrocarbon group having 7 to 15 carbon atoms or a divalent aromatic hydrocarbon group having 6 to 15 carbon atoms.

Examples of the suitable organic diisocyanates include 1,4-tetramethylene diisocyanate, 1,6-hexamethylene diisocyanate, 2,2,4-trimethyl-1,6-hexamethylene diisocyanate, 1,12-dodecamethylene diisocyanate, cyclohexane-1,3- and -1,4-diisocyanate, 1-isocyanato-2-isocyanatomethyl cyclopentane, 1-isocyanato-3-isocyanatomethyl-3,5,5-trimethyl-cyclohexane(isophorone diisocyanate or IPDI), bis-(4-isocyanatocyclohexyl)-methane, 2,4'-dicyclohexylmethane diisocyanate, 1,3-and 1,4-bis-(isocyanatomethyl)-cyclohexane, bis-(4-isocyanato-3-methylcyclohexyl)-methane, $\alpha,\alpha,\alpha',\alpha'$-tetramethyl-1,3- and/or -1,4-xylylene diisocyanate, 1-isocyanato-1-methyl-4(3)-isocyanatomethyl cyclohexane, 2,4- and/or 2,6-hexahydrotoluylene diisocyanate, 1,3- and/or 1,4-phenylene diisocyanate, 2,4- and/or 2,6-toluylene diisocyanate, 2,4-and/or 4,4'-diphenylmethane diisocyanate, 1,5-diisocyanato naphthalene and mixtures thereof. Aromatic polyisocyanates containing 3 or more isocyanate groups such as 4,4',4''-triphenylmethane diisocyanate and polyphenyl polymethylene polyisocyanates obtained by phosgenating aniline/formaldehyde condensates may also be used.

In accordance with the present invention the polyisocyanate component is preferably in the form of an NCO prepolymer or a polyisocyanate adduct, more preferably a polyisocyanate adduct. Suitable polyisocyanate adducts are those containing isocyanurate, uretdione, biuret, urethane, allophanate, carbodiimide and/or oxadiazinetrione groups. The polyisocyanates adducts have an average functionality of 2 to 6 and an NCO content of 5 to 30% by weight.

1) Isocyanurate group-containing polyisocyanates which may be prepared as set forth in DE-PS 2,616,416, EP-OS 3,765, EP-OS 10,589, EP-OS 47,452, US-PS 4,288,586 and US-PS 4,324,879. The isocyanato-isocyanurates generally have an average NCO functionality of 3 to 3.5 and an NCO content of 5 to 30%, preferably 10 to 25% and most preferably 15 to 25% by weight.

2) Uretdione diisocyanates which may be prepared by oligomerizing a portion of the isocyanate groups of a diisocyanate in the presence of a trialkyl phosphine catalyst and which may be used in admixture with other aliphatic and/or cycloaliphatic polyisocyanates, particularly the isocyanurate group-containing polyisocyanates set forth under (1) above.

3) Biuret group-containing polyisocyanates which may be prepared according to the processes disclosed in U.S. Patent Nos. 3,124,605; 3,358,010; 3,644,490: 3,862,973; 3,906,126; 3,903,127; 4,051,165; 4,147,714; or 4,220,749 by using co-reactants such as water, tertiary alcohols, primary and secondary monoamines, and primary and/or secondary diamines. These polyisocyanates preferably have an NCO content of 18 to 22% by weight and an average NCO functionality of 3 to 3.5.

4) Urethane group-containing polyisocyanates which may be prepared in accordance with the process disclosed in U.S. Patent No. 3,183,112 by reacting excess quantities of polyisocyanates, preferably diisocyanates, with low molecular weight glycols and polyols having molecular weights of less than 400, such as trimethylol propane, glycerine, 1,2-dihydroxy propane and mixtures thereof. The urethane group-containing polyisocyanates have a most preferred NCO content of 12 to 20% by weight and an (average) NCO functionality of 2.5 to 3.

5) Allophanate group-containing polyisocyanates which may be prepared according to the processes disclosed in U.S. Patent Nos. 3,769,318, 4,160,080 and 4,177,342. The allophanate group-containing polyisocyanates have a most preferred NCO content of 12 to 21% by weight and an (average) NCO functionality of 2 to 4.5.

6) Isocyanurate and allophanate group-containing polyisocyanates which may be prepared in accordance with the processes set forth in U.S. Patents 5,124,427, 5,208,334 and 5,235,018; the disclosures of which are herein incorporated by reference.

7) Carbodiimide group-containing polyisocyanates which may be prepared by oligomerizing di- or polyisocyanates in the presence of known carbodiimidization catalysts as described in DE-PS 1,092,007, US-PS 3,152,162 and DE-OS 2,504,400, 2,537,685 and 2,552,350.

8) Polyisocyanates containing oxadiazinetrione groups and containing the reaction product of two moles of a diisocyanate and one mole of carbon dioxide.

Preferred polyisocyanate adducts are the polyisocyanates containing isocyanurate groups, biuret groups or mixtures of isocyanurate and allophanate groups.

The NCO prepolymers, which may also be used as the polyisocyanate component in accordance with the present invention, are prepared from the previously described monomeric polyisocyanates or polyisocyanate adducts, preferably monomeric diisocyanates, and organic compounds containing at least two isocyanate-reactive groups, preferably at least two hydroxy groups. These organic compounds include high molecular weight compounds having molecular weights of 400 to about 6,000, preferably 800 to about 3,000, and optionally low molecular weight compounds with molecular weights below 400. The molecular weights are number average molecular weights ($M_n$) and are determined by end group analysis (OH number). Products obtained by reacting polyisocyanates exclusively with low molecular weight compounds are polyisocyanates adducts containing urethane groups and are not considered to be NCO prepolymers.

Examples of the high molecular weight compounds are polyester polyols, polyether polyols, polyhydroxy polycarbonates, polyhydroxy polyacetals, polyhydroxy polyacrylates, polyhydroxy polyester amides and polyhydroxy polythioethers. The polyester polyols, polyether polyols and polyhydroxy polycarbonates are preferred. Further details concerning the low molecular weight compounds and the starting materials and methods for preparing the high molecular weight polyhydroxy compounds are disclosed in U.S. Patent 4,701,480, herein incorporated by reference.

These NCO prepolymers generally have an isocyanate content of about 0.5 to 30% by weight, preferably about 1 to 20% by weight, and are prepared in known manner by the reaction of the above mentioned starting materials at an NCO/OH equivalent ratio of about 1.05:1 to 10:1 preferably about 1.1:1 to 3:1. This reaction may take place in a suitable solvent which may optionally be removed by distillation after the reaction along with any unreacted volatile starting polyisocyanates still present. In accordance with the present invention NCO prepolymers also include NCO semi-prepolymers which contain unreacted starting polyisocyanates in addition to the urethane group-containing prepolymers.

Component b) contains at least one compound corresponding to the formula:

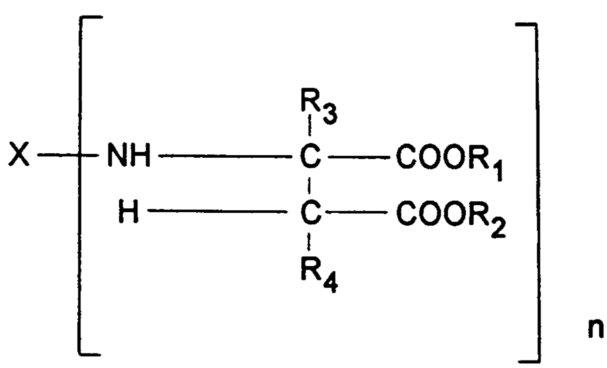

(I)

wherein

X represents an organic group which has a valency of n and is inert towards isocyanate groups at a temperature of 100 °C or less, preferably a divalent hydrocarbon group obtained by the removal of the amino groups from an aliphatic, araliphatic or cycloaliphatic polyamine, more preferably a diamine,

$R_1$ and $R_2$ may be identical or different and represent organic groups which are inert towards isocyanate groups at a temperature of 100 °C or less, preferably methyl or ethyl groups,

$R_3$ and $R_4$ may be identical or different and represent hydrogen or organic groups which are inert towards isocyanate groups at a temperature of 100 °C or less, preferably hydrogen and

n represents an integer with a value of at least 2, preferably 2 to 4 and more preferably 2.

These compounds are prepared in known manner by reacting the corresponding primary polyamines corresponding to the formula

$X\text{-}(\text{-}NH_2)_n$ (II)

with optionally substituted maleic or fumaric acid esters corresponding to the formula

$R_1OOC\text{-}CR_3 = CR_4\text{-}COOR_2$ (III)

Suitable polyamines include ethylene diamine, 1,2-diaminopropane, 1,4-diaminobutane, 1,3-diaminopentane, 1,6-diaminohexane, 2,5-diamino-2,5-dimethylhexane, 2,2,4-and/or 2,4,4-trimethyl-1,6-diaminohexane, 1,11-diaminoundecane, 1,12-diaminododecane, 1,3- and/or 1,4-cyclohexane diamine, 1-amino-3,3,5-trimethyl-5-aminomethyl-cyclohexane, 2,4- and/or 2,6-hexahydrotoluylene diamine, 2,4'- and/or 4,4'-diamino-dicyclohexyl methane and 3,3'-dialkyl-4,4'-diamino-dicyclohexyl methanes (such as 3,3'-dimethyl-4,4'-diamino-dicyclohexyl methane and 3,3'-diethyl-4,4'-diamino-dicyclohexyl methane.

Preferred are 1,4-diaminobutane, 1,6-diaminohexane, 2,2,4-and 2,4,4-trimethyl-1,6-diamino-hexane, 1,3- and/or 1,4-cyclohexane diamine, 1-amino-3,3,5-trimethyl-5-aminomethyl-cyclohexane, 2,4- and/or 2,6-hexahydrotoluylene diamine, 4,4'-diamino-dicyclohexyl methane, 3,3-dimethyl-4,4'-diamino-dicyclohexyl methane and 3,3-diethyl-4,4'-diaminodicyclohexyl methane.

Also suitable, though less preferred are the aromatic polyamines such as 2,4- and/or 2,6-diaminotoluene and 2,4'- and/or 4,4'-diaminodiphenyl methane. Relatively high molecular weight polyether polyamines containing aliphatically bound primary amino groups, for example, the products marketed under the Jeffamine trademark by Texaco, are also suitable.

Examples of optionally substituted maleic or fumaric acid esters suitable for use in the preparation of the compounds corresponding to formula I include dimethyl, diethyl and di-n-butyl esters of maleic acid and fumaric acid and the corresponding maleic or fumaric acid esters substituted by methyl in the 2- and/or 3-position.

The preparation of the "polyaspartic acid derivatives" corresponding to formula I from the above mentioned starting materials may be carried out, for example, at a temperature of 0 to 100 °C using the starting materials in such proportions that at least 1, preferably 1, olefinic double bond is present for each primary amino group. Excess starting materials may be removed by distillation after the reaction. The reaction may be carried out solvent-free or in the presence of suitable solvents such as methanol, ethanol, propanol, dioxane and mixtures of such solvents.

Suitable zeolites c) include any known zeolites which are capable of adsorbing water. Preferred zeolites are those which have pore openings which are small enough such that they adsorb water without adsorbing the binder components present in the coating compositions. In this regard the zeolites preferably have a pore diameter of less than 10 Å, more preferably less than 5 Å. Examples of suitable zeolites are sodium aluminosilicates and potassium sodium aluminosilicates, such as those available from Miles as Baylith T powder and Baylith L powder.

The zeolites are added to the coating compositions in an amount sufficient to adsorb 20 to 100%, preferably 60 to 100% and more preferably 100%, of the water present in the coating compositions. Excess amounts may be added, but do not provide any significant benefits. The amount of zeolite which is necessary can be calculated based on the water adsorption ability of the zeolite. For example, the preceding Baylith powders are capable of adsorbing about 25% of their weight in water.

Generally, the preceding guidelines can be achieved if zeolite c) is added in a minimum amount of at least 0.1 weight percent, preferably at least 0.5 weight percent and more preferably at least 1 weight percent, based on the total weight of the coating composition, up to a maximum amount of 15 weight percent, preferably 10 weight percent and more preferably 7 weight percent, based on the weight of the

total weight of the coating composition.

The binders present in the coating compositions according to the invention contain polyisocyanate component a), at least one secondary polyamine b) corresponding to formula I and zeolite c). While component b) may also contain other isocyanate-reactive components, such as the polyols commonly used in polyurethane coating compositions, their presence is not preferred. Components a) and b) are used in amounts sufficient to provide an equivalent ratio of isocyanate groups to isocyanate-reactive groups of about 0.8:1 to 20:1, preferably about 0.8:1 to 2.1 and more preferably about 0.8:1 to 1.5:1.

The binders to be used according to the invention are prepared by mixing all of the individual components together or by premixing two of the components before adding the third component. For example, tin compound c) may be initially blended with the component a) or component b) before the addition of the other component.

Preparation of the binders is carried out solvent-free or in the presence of the solvents conventionally used in polyurethane or polyurea coatings. It is an advantage of the process according to the invention that the quantity of solvent used may be greatly reduced when compared with that required in conventional two-component systems.

Examples of suitable solvents include xylene, butyl acetate, methyl isobutyl ketone, methoxypropyl acetate, N-methyl pyrrolidone, Solvesso solvent, petroleum hydrocarbons, iso-butanol, butyl glycol, chlorobenzenes and mixtures of such solvents.

In the coating compositions to be used for the process according to the invention, the ratio by weight of the total quantity of binder components a) and b) to the quantity of solvent is about 40:60 to 100:0, preferably about 60:40 to 100:0.

The coating compositions to be used for the process according to the invention may also contain other auxiliary agents and additives conventionally used in polyurethane and polyurea coatings, in particular pigments, fillers, catalysts, levelling agents, antisettling agents, UV stabilizers and the like. Coating compositions containing pigments and/or fillers are especially suitable for the present invention due to the difficulty of removing all of the moisture from these additives.

It is also possible to incorporate other additives which increase the pot life of compositions containing polyisocyanates and polyaspartic acid derivatives, such as the tin compounds disclosed in U.S. Patent 5,243,012, the disclosure of which is herein incorporated by reference.

The properties of the coatings obtained by the process according to the invention may be adjusted, in particular by suitable choice of the nature and proportions of the starting components a) and b). Thus, for example, the presence of relatively high molecular weight, linear polyhydroxyl compounds in the prepolymers or semi-prepolymers of component a) increases the elasticity of the coatings; whereas, the absence of such starting components increases the crosslinking density and hardness of the resulting coatings.

For carrying out the process according to the invention, the coating compositions to be used according to the invention are applied as one or more layers to substrates by known methods such as spraying, brush coating, immersion or flooding or by means of rollers or doctor applicators. The process according to the invention is suitable for the formation of coatings on various substrates, e.g., metals, plastics, wood, cement, concrete or glass. The process according to the invention is particularly suitable for the formation of coatings on sheet steel, for example, for the manufacture of car bodies, machine trim panels, vats or containers. The substrates to be coated by the process according to the invention may be treated with suitable primers before the process according to the invention is carried out.

After the substrates exemplified above have been coated, the coatings may be cured at either ambient temperature, e.g., by air drying or so-called forced drying, or at elevated temperature. It is of great benefit that the coatings will not thermally degrade even at the higher temperatures which may occur in the event of a breakdown of the coatings plant.

The suppression of the viscosity increase for the coating compositions according to the invention while retaining the dry times is demonstrated in the examples which follow. All parts and percentages given are by weight unless otherwise indicated.

EXAMPLES

The following starting materials were used in the examples:

Polyisocyanate 1

An uretdione and isocyanurate group-containing polyisocyanate prepared by oligomerizing a portion of the isocyanate groups of 1,6-hexamethylene diisocyanate and having an isocyanate content of 22.1%, a content of monomeric diisocyanate of <0.1%, a viscosity at 25 °C of 200 mPa.s.

Polyisocyanate 2

To a 500 ml 3-neck flask equipped with a gas bubbler, mechanical stirrer, thermometer and condenser was added 301.7 parts of hexamethylene diisocyanate and 13.3 parts of 1-butanol. The stirred mixture was heated for 1 hour at 60 °C while dry nitrogen was bubbled through the reaction mixture. The temperature of the reaction mixture was then raised to 90 °C. To the reaction mixture at 90 °C was added 0.214 parts of a 4.4% solution of N,N,N-trimethyl-N-benzyl-ammonium hydroxide in 1-butanol. When the reaction mixture reached an NCO content of 34.8%, the reaction was stopped by adding 0.214 parts of di-(2-ethylhexyl)-phosphate. The excess monomer was removed by thin film evaporation to provide an almost colorless clear liquid having a viscosity of 630 mPa.s (25 °C), an NCO content of 19.7% and a free monomer (HDI) content of 0.35%. The yield was 48.6%.

Polyaspartic Acid Esters (PAE's)

The polyaspartic acid esters (PAE) were prepared by charging two moles of diethyl maleate to a 3-necked round bottom flask containing a mechanical stirrer, thermometer and an addition funnel. To the stirred diethyl maleate at 25 °C under a nitrogen atmosphere was added portion wise one mole of the diamines set forth in Table 1, so as to maintain a reaction temperature of 50 °C or less using an ice water cooling bath, if necessary. At the completion of diamine addition the reaction temperature was maintained at 50 °C until no diethyl maleate was present in the reaction mixture as determined by TLC. The crude reaction mixture was cooled to room temperature and poured into a container and sealed.

TABLE 1

| PAE | Diamine Starting Material |
|---|---|
| PAE A | bis-(4-aminocyclohexyl)-methane |
| PAE B | bis-(4-amino-2-methyl-cyclohexyl)-methane |

Additive A - dibutyltin dilaurate (T-12, available from Air Products)
Zeolite A - Baylith L powder, available from Miles)
Pigment A - titanium dioxide (Ti-Pure R-960, available from DuPont)
Pigment Dispersant A - Anti-Terra U, available from Byk Chemie
Polyol A - a polyesterether polyol (Desmophen 1150, available from Miles)

The invention is further illustrated but is not intended to be limited by the following examples in which all parts and percentages are by weight unless otherwise specified.

EXAMPLES

Example 1

Effect of Zeolite A on two-component, clear polyurea coating compositions based on PAE A and Polyisocyanate 1.

Component 1 of formulations A-D described in Table 1 was prepared by placing one equivalent of PAE A in a container, adding the other ingredients in appropriate quantities as described in the formulations, and mixing them in a high speed cowles disperser. A portion of the mixture was then charged into a 120 ml. plastic cup, and the specified amount of polyisocyanate 1 was added to it, so that the NCO equivalents

were 30% in excess of the amine equivalents. The mixture was then stirred, and a portion of it was placed in a closed 60 ml. container. The initial viscosity of the mixture and the viscosity build-up over time was measured at 25 ° C by using a Brookfield Viscometer. The appropriate LV spindles were used depending upon the viscosity of the mixture. The results are given in Table 2.

Table 1

| Formulations A-D | | | | |
|---|---|---|---|---|
| Component 1: | A (Comp.) | B | C (Comp.) | D |
| PAE A | 277 | 277 | 277 | 277 |
| Additive A | - | - | 0.26 | 0.26 |
| Zeolite A | - | 27.5 | - | 27.5 |
| n-Butyl Acetate | 27.6 | 27.0 | 27.6 | 27.0 |
| Component | | | | |
| Polyisocyanate 1 | 247 | 247 | 247 | 247 |

**Table 2**
**Viscosity (mPa·s)**
**Formulations A-D**

| | A (Comp) | B | C (Comp) | D |
|---|---|---|---|---|
| Initial | 345 | 270 | 260 | 241 |
| At 1 hour | 61,000 | 1275 | 840 | 425 |
| At 2 hours | Gelled | 7000 | 1540 | 660 |

A comparison of formulation A with B and a comparison of formulation C with D indicates the improved pot life which may achieved in accordance with the present invention, both in the absence of tin compounds and in the presence of these compounds.

Example 2

Effect of Zeolite A on two-component, pigmented, polyurea coating compositions based on Polyisocyanate 2 and either PAE A or Polyol A.

Component 1 of formulations E-H described in Table 3 was prepared by placing one equivalent of PAE A or the Polyol 1 in a container, adding the other ingredients in appropriate quantities as described in the formulations, and mixing them in a high speed cowles disperser. The mixture was then placed in a 240 ml. container, and 1.1 equivalents of polyisocyanate 2 was added to it. The initial viscosity of the mixture and the viscosity build-up over time was measured at 25 ° C by using a Brookfield Viscometer. The appropriate LV spindles were used depending upon the viscosity of the mixture. The results are given in Table 4.

Table 3

| Formulations E-H | | | | |
|---|---|---|---|---|
| | E (Comp) | F | G (Comp) | H (Comp) |
| Component 1 | | | | |
| PAE A | 421.7 | 421.7 | - | - |
| Polyol A | - | - | 448.8 | 448.8 |
| Pigment I | 396.8 | 396.9 | 385.5 | 385.5 |
| Zeolite A | - | 27.8 | - | 27.0 |
| Additive A | 2.4 | 2.4 | 2.3 | 2.3 |
| Component 2 | | | | |
| Polyisocyanate 2 | 371.8 | 371.8 | 322.3 | 322.3 |

Table 4
Viscosity (in mPa·s)
Formulations E-H

| | E (Comp) | F | G (Comp) | H (Comp) |
|---|---|---|---|---|
| Initial | 3600 | 2900 | 3500 | 3900 |
| 15 Minutes | Gelled | 3000 | 4700 | 5300 |
| at 1 hour | - | 4600 | - | 37,000 |
| at 1.5 hours | - | 6100 | Gelled | Gelled |
| at 2 hours | - | 8800 | - | - |
| at 3 hours | - | 17,000 | | |

A comparison of formulation E with F indicates the improved pot life which may achieved in accordance with the present invention. However, a comparison of formulation G with H indicates that zeolites do not improve the pot lives of systems containing polyisocyanates and polyols in the same manner that they improve the pot lives of systems containing polyisocyanates and polyaspartates.

Example 3

Effect of Zeolite A on two-component, pigmented, polyurea coating compositions based on PAE B and Polyisocyanate 1.

Component 1 of formulations I-L described in Table 5 was prepared by placing one equivalent of PAE B in a container, adding the other ingredients in appropriate quantities as described in the formulations, and mixing them in a high speed cowles disperser. A portion of the mixture was then charged into a 120 ml. plastic cup, and the specified amount of polyisocyanate 1 was added to it, so that the NCO equivalents were 30% in excess of the amine equivalents. The mixture was then stirred, and a portion of it was placed in a closed 60 ml. container. The initial viscosity of the mixture and the viscosity build-up over time was measured at 25°C by using a Brookfield Viscometer. The appropriate LV spindles were used depending upon the viscosity of the mixture. The results are given in Table 6.

Table 5

| Formulations I-L | | | | |
|---|---|---|---|---|
| | I (Comp) | J | K (Comp) | L |
| Component 1 | | | | |
| PAE B (90% in | 325 | 277 | 438.4 | 438.4 |
| n-butyl acetate | | | | |
| Pigment A | 242.8 | 242.8 | 360.3 | - |
| Pigment | 4.9 | 4.9 | - | - |
| Dispersant A | | | | |
| Zeolite A | - | 28.8 | - | 40 |
| Additive A | 0.29 | 0.29 | - | - |
| Component 2 | | | | |
| Polyisocyanate 1 | 247 | 247 | 333.2 | 333.2 |

Table 6

Viscosity (mPa·s)
Formulations I-L

| | I (Comp) | J | K (Comp) | L |
|---|---|---|---|---|
| Initial | 720 | 680 | 590 | 480 |
| at 1 hour | Foaming | 960 | 3600 | 570 |
| at 2 hours | - | 1080 | 7000 | 630 |
| at 3 hours | - | - | 9200 | 780 |

A comparison of formulation I with J and a comparison of formulation K with L indicates the improved pot life which may achieved in accordance with the present invention, both in the presence of tin compounds and in the absence of these compounds.

Example 4

Effect of Zeolite A on two component, polyurea clear coating compositions based on PAE's A and B and polyisocyanate 1.

Component 1 of formulations M-P described in Table 7 was prepared by placing one equivalent of PAE A or PAE B in a container, adding the other ingredients in appropriate quantities as described in the formulations, and mixing them in a high speed cowles disperser. A portion of the mixture was then charged into a 120 ml. plastic cup, and the specified amount of polyisocyanate 1 was added to it, so that the NCO equivalents were 30% in excess of the amine equivalents. The mixture was then stirred, and a portion of it was placed in a closed 60 ml. container. The initial viscosity of the mixture and the viscosity build-up over time was measured at 25°C by using a Brookfield Viscometer. The appropriate LV spindles were used depending upon the viscosity of the mixture. The results are given in Table 8.

| Table 7<br>Formulations M-P | | | | |
|---|---|---|---|---|
| | M | N (Comp) | O | P (Comp) |
| Component 1 | | | | |
| PAE A | 277 | 277 | - | - |
| PAE B | - | - | 292 | 292 |
| Zeolite A | 27.5 | - | 29.0 | - |
| Component 2 | | | | |
| Polyisocyanate 1 | 247 | 247 | 247 | 247 |

| Table 8<br>Viscosity (mPa·s)<br>Formulations M-P | | | | |
|---|---|---|---|---|
| | M | N (Comp) | D | P (Comp) |
| Initial | 600 | 840 | 1188 | 975 |
| 1/2 hour | 1438 | Gelled | 1650 | 2062 |
| 1 hour | 4550 | - | 2125 | 3400 |
| 1.5 hours | 16,000 (thixotropic) | - | 2650 | 4300 |
| 2 hours | 45,750 (thixotropic) | - | 3100 | 8100 |

A comparison of formulation M with N and a comparison of formulation O with P indicates the improved pot life which may achieved in accordance with the present invention.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

**Claims**

**1.** A coating composition for the preparation of a polyurea coating which comprises
  a) a polyisocyanate component,
  b) at least one compound corresponding to the formula

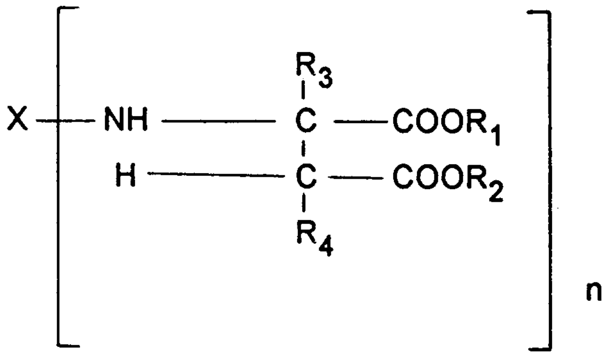

(I)

wherein

X represents an organic group which has a valency of n and is inert towards isocyanate groups at a temperature of 100 °C or less,

$R_1$ and $R_2$ may be identical or different and represent organic groups which are inert towards isocyanate groups at a temperature of 100 °C or less,

$R_3$ and $R_4$ may be identical or different and represent hydrogen or organic groups which are inert towards isocyanate groups at a temperature of 100 °C or less, and

n represents an integer with a value of at least 2, and

c) 0.1 to 15 weight percent, based on the total weight of the coating composition, of a water-adsorbing zeolite.

**2.** The composition of Claim 1 wherein $R_1$ and $R_2$ represent a methyl or ethyl group, $R_3$ and $R_4$ represent hydrogen and n is 2.

**3.** The composition of Claim 1 or 2 wherein X represents a group obtained by removing the amino groups from an aliphatic, araliphatic or cycloaliphatic diamine.

**4.** The composition of Claims 1 to 3 wherein the proportions of components a) and b) are calculated to provide an equivalent ratio of isocyanate groups of component a) to isocyanate-reactive groups of component b) of about 0.8:1 to 20:1.

**5.** The composition of Claims 1 to 4 wherein said composition additionally contain a pigment.

**6.** The composition of Claims 1 to 5 wherein said zeolite has an average pore diameter of less than 10 Å.

**7.** The composition of Claims 1 to 6 wherein component c) is present in an amount of 0.5 to 10 weight percent, based on the total weight of the coating composition.

European Patent Office

# EUROPEAN SEARCH REPORT

Application Number
EP 95 10 1134

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,Y | US-A-5 243 012 (D.A.WICKS ET AL.)<br>* claims 1-5 *<br>--- | 1-5,7 | C08G18/38<br>C09D175/02 |
| Y | GB-A-2 105 356 (DEBORAH COATINGS LTD.)<br>* page 1, line 50 - line 54; claims 1,10; example *<br>--- | 1-5,7 | |
| A<br><br>D | EP-A-0 403 921 (BAYER AG)<br>* page 6, line 1 - line 3; claims 1-3 *<br>& US-A-5 126 170<br>----- | 1-5 | |

TECHNICAL FIELDS SEARCHED (Int.Cl.6)
C08G
C08K

The present search report has been drawn up for all claims

| Place of search | Date of completion of the search | Examiner |
|---|---|---|
| BERLIN | 12 May 1995 | Angiolini, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document